(19) Europäisches Patentamt
European Patent Office
Office européen des brevets

(11) **EP 1 571 058 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
*B60T 8/00* *(2006.01)*    *B60T 8/24* *(2006.01)*

(21) Anmeldenummer: **04029629.5**

(22) Anmeldetag: **15.12.2004**

(54) **Verfahren zur Abbremsung eines Fahrzeuges**

Braking method for a vehicle

Procédé de freinage d'un véhicule

(84) Benannte Vertragsstaaten:
**DE FR GB IT NL SE**

(30) Priorität: **03.03.2004 DE 102004010233**

(43) Veröffentlichungstag der Anmeldung:
**07.09.2005 Patentblatt 2005/36**

(73) Patentinhaber: **WABCO GmbH**
**30453 Hannover (DE)**

(72) Erfinder:
• **Holst, Hans**
**30926 Seelze (DE)**
• **Tha, Ingo**
**30449 Hannover (DE)**

(74) Vertreter: **Günther, Constantin et al**
**WABCO GmbH**
**Postfach 91 12 62**
**30432 Hannover (DE)**

(56) Entgegenhaltungen:
**EP-A- 1 136 334**    **EP-A- 1 142 768**
**DE-A1- 10 046 036**

**Beschreibung**

Die Erfindung betrifft ein Verfahren zur Abbremsung eines Fahrzeuges gemäß dem Oberbegriff des Patentanspruchs 1.

Ein gattungsgemäßes Verfahren ist aus der EP 1 142 768 A2 bekannt.

Das bekannte Verfahren dient zur Vermeidung des Umkippens eines Fahrzeuges um seine Längsachse. Zu diesem Zweck wird eine Umkippgefahr ermittelt und bei vorliegender Umkippgefahr das Fahrzeug bzw. der Fahrzeugzug automatisch gebremst.

Das gattungsgemäße Verfahren hat sich als vorteilhaft bewährt, insbesondere bei Fahrzeugen mit Antiblockiersystem, welches ein Blockieren von Rädern bei der automatischen Bremsung vermeidet.

Ein Verfahren gemäß dem Oberbegriff des Anspruchs 1 ist aus der EP 1 136 334 A1 bekannt.

Der Erfindung liegt die Aufgabe zugrunde, ein derartiges Verfahren zur Abbremsung eines Fahrzeuges anzugeben, welches sich insbesondere für Lastkraftwagen/Anhänger-Züge mit einem Deichselanhänger eignet. Derartige Deichselanhänger können hinsichtlich der Steuerung der Bremsanlage durch das Antiblockiersystem die Besonderheit aufweisen, dass an wenigstens einer Achse des Deichselanhängers für die Blockiervermeidung durch das Antiblockiersystem ein gemeinsamer Bremsdruckmodulator für die Räder dieser Achse vorgesehen ist. Hierdurch wirken sich Bremskraftanpassungen durch das Antiblockiersystem an dieser Achse immer auf sämtliche Räder bzw. Radbremsen dieser Achse aus.

Die erwähnte Aufgabe wird durch die in dem Patentanspruch 1 angegebene Erfindung gelöst. Weiterbildungen und vorteilhaften Ausgestaltungen der Erfindung sind in den Unteransprüchen angegeben.

Die Erfindung hat den Vorteil, die Fahrsicherheit von Fahrzeugzügen, bestehend aus Zugfahrzeug und Deichselanhänger, deutlich zu erhöhen und eine Umkippgefahr, wie sie beispielsweise in engen Fahrbahnkurven oder Autobahnausfahrten auftreten kann, deutlich zu verringern.

Es ist üblich, dass derartige Bremsanlagen von Deichselanhängern mit dem gemeinsamen Bremsdruckmodulator an einer Fahrzeugachse hinsichtlich der Antiblockier-Regelung an dieser Achse vorzugsweise nach dem Select-Low-Verfahren, gegebenenfalls mit gewissen Modifikationen, geregelt wird. Bei solchen an das Select-Low-Verfahren angelehnten Regelungsverfahren legt das Antiblockiersystem die Bremskraft an der Achse mit dem gemeinsamen Bremsdruckmodulator nach Maßgabe des auf dem geringeren Reibwert befindlichen Rades, oder mit anderen Worten, des mit geringerer Geschwindigkeit laufenden Rades, fest. Bei einem Fahrzeug, bei dem eine Umkippgefahr vorliegt, ist in der Regel das kurveninnere Rad einer Achse entlastet und kann im Extremfall sogar den Bodenkontakt verlieren. In solchen Fällen bewirkt eine automatische Abbremsung des Fahrzeuges zunächst einmal ein starkes Verzögern des entlasteten kurveninneren Rades, welches bis zum Stillstand kommen kann. Die starke Verzögerung bzw. der Stillstand dieses Rades sind hinsichtlich einer Blockiergefahr oder der Gefahr einer Abnutzung des Reifens infolge Blockierens unproblematisch, da das Rad ohnehin einen geringen oder gar keinen Bodenkontakt aufweist. Auf der anderen Seite würde eine Regelung der Räder dieser Achse mit einem gemeinsamen Bremsdruckmodulator nach einem an das Select-Low-Verfahren angelehnten Regelungsverfahren eine starke Reduzierung der wirksamen Bremskraft an dieser Achse bewirken, da das Antiblockiersystem aufgrund des stillstehenden, entlasteten Rades annehmen muss, dort liege ein hoher Bremsschlupf mit entsprechender Blockiergefahr vor.

Das erfindungsgemäße Verfahren hat den weiteren Vorteil, eine solche Fehleinschätzung bekannter Antiblockiersysteme zu vermeiden, so dass eine durch automatische Betätigung der Bremsanlage eingestellte Bremskraft zur Vermeidung des Umkippens auch an der Achse mit dem gemeinsamen Bremsdruckmodulator erhalten werden kann. Hierdurch kann das kurvenäußere, mit hoher Radlast beaufschlagte Rad dieser Achse erheblich zur Verzögerung des umkippgefährdeten Fahrzeuges beitragen. So kann bei einem Zweiachs-Deichselanhänger mittels des erfindungsgemäßen Verfahrens die mögliche Verzögerung bei Umkippgefahr in etwa verdoppelt werden. Mit anderen Worten, die Umkippgefahr kann etwa doppelt so schnell beseitigt werden.

Gemäß einer vorteilhaften Weiterbildung der Erfindung arbeitet das Antiblockiersystem an der Achse mit dem gemeinsamen Bremsdruckmodulator während der automatischen Betätigung der Bremsanlage nach dem Select-High-Verfahren. Hierdurch ist eine einfache Umschaltung der Regelungsverfahren zwischen Select-High-Verfahren im Rahmen der Umkippgefahr und dem im Normalfall angewendeten Regelungsverfahren möglich. Ein weiterer Vorteil besteht darin, dass das Select-High-Verfahren nur an der Achse mit dem gemeinsamen Bremsdruckmodulator zum Einsatz kommt, und zwar nur bei Vorliegen der Umkippgefahr. Hierdurch können Beschädigungen an den Reifen vermieden werden.

Gemäß einer vorteilhaften Weiterbildung der Erfindung wird auf eine Umkippgefahr erkannt, wenn zumindest das kurveninnere Rad der Achse mit dem gemeinsamen Bremsdruckmodulator keinen oder zumindest einen deutlich verringerten Bodenkontakt, verglichen mit sonst vorliegenden Fahrzuständen, aufweist. Vorteilhaft kann die Verringerung des Bodenkontakts durch Auswertung von Signalen, die dem Antiblockiersystem ohnehin zur Verfügung stehen, ermittelt werden, wie etwa Geschwindigkeits- und Beschleunigungssignale der einzelnen Räder.

Weitere vorteilhafte Verfahren, die Umkippgefahr zu erkennen, seien nachfolgend beispielhaft aufgelistet:

- Auswertung der Querbeschleunigung des Fahrzeuges, z. B. durch einen Querbeschleunigungssensor oder durch Differenzbildung aus Raddrehgeschwindigkeits-Signalen;
- Durchführung einer Testbremsung mit geringem Bremsdruck sowie anschließender Überwachung auf Blockiersignale des Antiblockiersystems;
- Messung der Radaufstandskraft, z. B. durch einen Kraftsensor, einen Wegsensor zur Ermittlung der Einfederung der Radfederung oder, bei luftgefederten Fahrzeugen, einer Drucksensierung im Luftfederbalg;
- Verwendung von optischen Sensoren, z. B. CCD-Kamera-Chips, zur Erkennung, ob ein Rad den Bodenkontakt verloren bzw. zumindest nahezu verloren hat;
- Ermittlung der Reifen-Verformung, z. B. ebenfalls durch die erwähnten optischen Sensoren;
- Auswertung des Reifendrucks.

Unter Nennung weiterer Vorteile wird die Erfindung nachfolgend anhand von Ausführungsbeispielen unter Verwendung von Zeichnungen sowie näher erläutert.

Es zeigen:

Fig. 1 einen Fahrzeugzug mit einem Deichselanhänger in Draufsicht und

Fig. 2 eine Ausführungsform des erfindungsgemäßen Verfahrens in Flussdiagrammdarstellung.

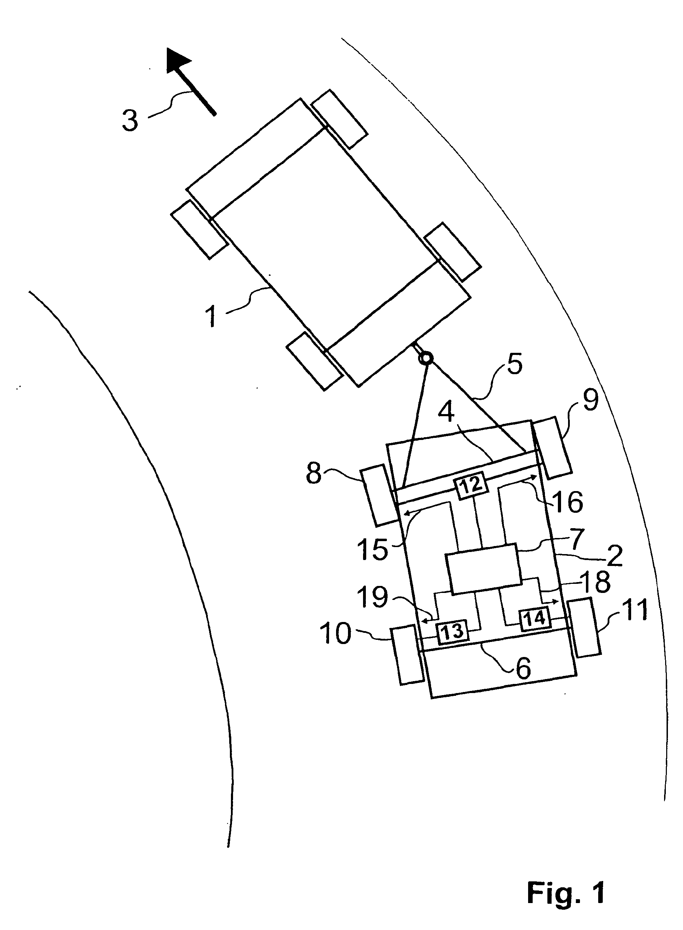

In der Fig. 1 ist ein aus einem Zugfahrzeug (1) und einem Anhängefahrzeug (2) bestehender Fahrzeugzug in Draufsicht dargestellt, der gerade auf einer Straße eine Linkskurve befährt. Die Fahrtrichtung des Fahrzeugzuges (1, 2) wird durch den Pfeil (3) symbolisiert. Das als Deichselanhänger ausgebildete Anhängefahrzeug (2) weist eine Vorderachse (4) mit Rädern (8, 9) sowie einer Deichsel (5) auf, mittels der das Anhängefahrzeug (2) an das Zugfahrzeug (1) angekoppelt ist. Die Achse (4) ist als lenkbare Deichselachse ausgebildet. Weiterhin weist das Anhängefahrzeug (2) eine Hinterachse (6) mit Rädern (10, 11) auf, welche starr, d. h. nicht lenkbar, ist. Das Anhängefahrzeug (2) weist eine Druckmittel-Bremsanlage mit elektronischer Steuerung auf, von der in der Fig. 1 nur die für die Erläuterung der Erfindung notwendigen Komponenten dargestellt sind. Die Bremsanlage des Anhängefahrzeugs (2) ist von dem Zugfahrzeug aus bei einer Bremsbetätigung durch den Fahrer über nicht dargestellte elektrische Leitungen und Druckmittel-Leitungen betätigbar. Zusätzlich ist die Bremsanlage des Anhängefahrzeuges automatisch durch eine elektronische Steuerung betätigbar, wobei die Bremskraft einstellbar ist. Die Einstellung der Bremskraft erfolgt bei einer Druckmittel-Bremsanlage durch Einstellung eines gewünschten Bremsdrucks.

Als Teile der Bremsanlage des Anhängefahrzeuges (2) sind in der Fig. 1 ein elektronisches Steuermodul (7) dargestellt, welches die elektronischen Komponenten eines Antiblockiersystems beinhaltet. Das Steuermodul (7) betätigt zur Blockiervermeidung der Räder (8, 9, 10, 11) bei einem Abbremsvorgang Bremsdruckmodulatoren (12, 13, 14) mittels elektrischer Signale, die über elektrische Leitungen zu den Bremsdruckmodulatoren (12, 13, 14) geführt werden. Die Bremsdruckmodulatoren (12, 13, 14) sind über Druckmittelleitungen jeweils mit den den einzelnen Rädern (8, 9, 10, 11) zugeordneten Bremszylindern der Bremsanlage verbunden. Hierbei ist für die Vorderachse (4) des Fahrzeuges ein gemeinsamer Bremsdruckmodulator (12) für die Räder (8, 9) vorgesehen. Für die Räder (10, 11) der Hinterachse (6) sind jeweils einzelne Bremsdruckmodulatoren (13, 14) vorgesehen.

Des weiteren sind Drehgeschwindigkeitssensoren (15, 16, 18, 19), die in der Nähe der jeweiligen Räder (8, 9, 10, 11) angeordnet sind und zur Raddrehgeschwindigkeits-Sensierung dieser Räder dienen, über elektrische Leitungen mit dem Steuermodul (7) verbunden. Das Steuermodul (7) ermittelt aufgrund der von den Drehgeschwindigkeitssensoren (15, 16, 18, 19) ermittelten Signale das Raddrehverhalten, d. h. Drehgeschwindigkeit und Drehbeschleunigung, der jeweiligen Räder.

Das Antiblockiersystem in dem Steuermodul (7) führt unter anderem die folgende Funktion aus: Sofern von einem oder mehreren der Drehgeschwindigkeitssensoren (15, 16, 18, 19) Signale erzeugt werden, die auf eine Blockiertendenz oder Blockiergefahr von Rädern hindeuten, steuert das Antiblockiersystem den dem jeweiligen Rad zugeordneten Bremsdruckmodulator (12, 13, 14) derart an, dass das Blockieren des Rades vermieden wird. Hierbei kann üblicherweise das Antiblockiersystem den Bremsdruckmodulator zwischen den Zuständen "Bremsdruck verringern", "Bremsdruck halten" und "Bremsdruck bis zu dem vom Fahrer oder automatisch vorgegebenen Wert erhöhen" wählen. Im Falle einer Blockiertendenz an einem der Räder (8, 9) wertet das Antiblockiersystem für die Steuerung des Bremsdruckmodulators (12) die Signale der Drehgeschwindigkeitssensoren (15, 16) derart aus, dass das Blockieren an dem stärker blockiergefährdeten Rad vermieden wird. Hierdurch wird sozusagen zwangsläufig auch ein Blockieren an dem anderen Rad der Achse (4) vermieden. Derartige Regelungsverfahren sind dem Fachmann bei einem Antiblockiersystem auch als Select-Low-Verfahren oder als modifizierte Achsregelung bekannt.

Außerdem führt das Steuermodul (7) die elektronische Steuerung zur automatischen Betätigung der Bremsanlage des Fahrzeuges (2) durch, gegebenenfalls unter Heranziehung von Steuersignalen von dem Zugfahrzeug (1).

Wie in der Fig. 1 erkennbar ist, befinden sich bei dem eine Linkskurve fahrenden Fahrzeugzug (1, 2) die Räder (9, 11) des Anhängefahrzeugs (2) auf der kurvenäußeren Seite und die Räder (8, 10) auf der kurveninneren Seite. Infolge der bei Kurvenfahrt entstehenden Fliehkräfte werden hierbei die Räder (8, 10) entlastet und die Räder (9, 11) entsprechend stärker belastet. Bei entsprechend schneller Kurvenfahrt und kleinen Kurvenradien können die Fliehkräfte zu einer erheblichen Verringerung des Bodenkontakts der kurveninneren Räder (8, 10) führen, die bis zu einem Abheben der Räder (8, 10) von der Fahrbahn, d. h. einem völligen Verlust des Bodenkontakts, gehen kann. In solchen Fällen besteht die Gefahr, dass das Anhängefahrzeug (2) oder der ganze Fahrzeugzug (1, 2) um seine Längsachse umkippt.

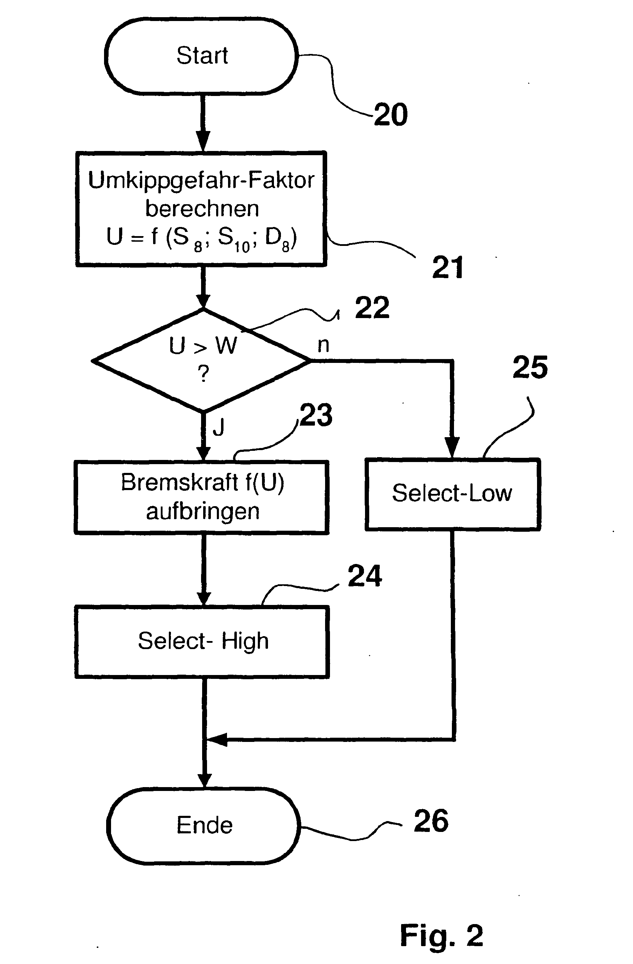

In der Fig. 2 ist eine vorteilhafte Ausführungsform des erfindungsgemäßen Verfahrens als Flussdiagramm dargestellt. Das Verfahren beginnt mit einem Block (20).

In einem darauffolgenden Block (21) wird ein Umkippgefahr-Faktor (U) bestimmt. Hierfür wird zunächst ein Querbeschleunigungssignal, welches in dem Steuermodul (7) beispielsweise durch einen Querbeschleunigungssensor oder durch Auswertung der Drehgeschwindigkeitssignale der Sensoren (15, 16, 18, 19) bestimmt wird, auf Überschreiten eines Grenzwert geprüft. Der Grenzwert ist derart festgelegt, im Falle eines Überschreitens eine Umkippgefahr vorliegen könnte. Wenn das Querbeschleunigungssignal den Grenzwert überschreitet, löst die elektronische Steuerung der Bremsanlage zur weiteren Verifizierung der Umkippgefahr automatisch eine Testbremsung an den kurveninneren Rädern (8, 10) des Anhängefahrzeugs (2) aus. Die Testbremsung ist eine Bremsung mit sehr geringer Bremskraft, welche zu keiner spürbaren Verzögerung des Fahrzeugzuges (1, 2) führt. Ausgehend von dem durch die Testbremsung hervorgerufenen Drehverhalten der Räder (8, 10) berechnet das Steuermodul (7) den Umkippgefahr-Faktor (U) vorteilhaft gemäß folgender Rechenvorschrift.

$$U = \frac{\text{MIN}\,(S_8,\,S_{10})}{A} + \frac{B - D_8}{C}$$

Hierbei geben die Größen ($S_8$, $S_{10}$) den an dem jeweiligen Rad (8 bzw. 10) vorliegenden Bremsschlupf an, die Größe ($D_8$) die Raddrehbeschleunigung des Rades (8) und die Größen (A, B, C) fahrzeugspezifische Umrechnungskonstanten, die je nach Anwendungsfall zu ermitteln sind. Der Operator (MIN) bestimmt dabei das Minimum der Größen ($S_8$, $S_{10}$), d.h. den betragsmäßig kleineren Bremsschlupfwert.

Mit dem so bestimmten Umkippgefahr-Faktor (U) prüft das Steuermodul (7) in einem nachfolgenden Block (22), ob der Umkippgefahr-Faktor (U) einen Schwellenwert (W) überschreitet. Die Überschreitung des Schwellenwerts (W) wird vorteilhaft als Kriterium verwendet, ob zumindest das kurveninnere Rad (8) der Achse (4) mit dem gemeinsamen Bremsdruckmodulator (12) keinen oder zumindest einen deutlich verringerten Bodenkontakt aufweist. Sofern dies nicht der Fall ist, wird zu einem Block (25) verzweigt, in welchem bei Bedarf das im Normalfall, also ohne Umkippgefahr, verwendete Verfahren zur Blockiervermeidung durchgeführt wird, z. B. Select-Low-Verfahren.

Sofern die Überprüfung gemäß Block (22) Umkippgefahr ergeben hat, wird zu einem Block (23) verzweigt, in welchem durch elektronische Steuerung automatisch die Bremsanlage des Anhängefahrzeugs (2) betätigt wird. Die hierbei an den Bremsen eingestellte Bremskraft wird nach einer vorgegebenen Funktion (f (U)) nach Maßgabe des Umkippgefahr-Faktors (U) bestimmt, derart, dass die Bremskraft desto höher ist, je geringer der Bodenkontakt des kurveninneren Rades (8) der Achse (4) mit dem gemeinsamen Bremsdruckmodulator (12) ist. Hierdurch können Beschädigungen infolge unerwünschten Blockierens an dem Rad (8) vermieden werden.

Bei Bestimmung des Umkippgefahr-Faktors (U) gemäß Gleichung [1] kann die Funktion (f(U)) als Proportionalfunktion ausgebildet sein, z.B.

$$f(U) = k * U$$

In einem darauffolgenden Block (24) führt das Antiblockiersystem erforderlichenfalls, d. h. wenn eine Blockiergefahr erkannt wird, eine Blockiervermeidung nach dem Select-High-Verfahren durch. Hierbei berücksichtigt das Antiblockiersystem das Raddrehverhalten des kurveninneren Rades (8) der Achse (4) mit dem gemeinsamen Bremsdruckmodulator (12) für die Blockiervermeidung zumindest zeitweise nicht. Dies hat den Vorteil, dass an der Achse (4) mit dem gemeinsamen Bremsdruckmodulator (12) eine zur Vermeidung des Umkippens ausreichende Bremskraft erzeugt werden kann, auch wenn hierbei an dem Rad (8) Drehzahlgeschwindigkeitssignale von dem Sensor (15) abgegeben werden, die unter normalen Umständen auf ein Blockieren hinweisen würden. Infolge der Verringerung des Bodenkontakts des Rades (8) ist hierbei jedoch nicht mit einer Beschädigung des Rades zu rechnen.

Das Verfahren gemäß Fig. 2 endet in einem Block (26).

Wie der Fachmann erkennt, ist die Erfindung auch in anderen Fahrzeugen als in dem zuvor als Ausführungsbeispiel beschriebenen Fahrzeugtyp vorteilhaft einsetzbar, wie z.B. in Anhängefahrzeugen, bei denen der gemeinsame Bremsdruckmodulator statt an der Vorderachse an einer anderen Achse wie etwa der Hinterachse angeordnet ist. Die Erfindung ist auch in Lastkraftwagen und Zugmaschinen, bei denen ein gemeinsamer Bremsdruckmodulator an wenigstens einer Achse vorgesehen ist, vorteilhaft einsetzbar.

**Patentansprüche**

1. Verfahren zur Abbremsung eines Fahrzeuges (2), bei dem die Bremsanlage des Fahrzeuges (2) durch elektronische Steuerung automatisch betätigbar ist, wobei die Bremsanlage zur Vermeidung des Blockierens von Rädern (8, 9, 10, 11) von einem Antiblockiersystem (7) steuerbar ist, und wobei die Bremsanlage zur Blockiervermeidung durch das Antiblockiersystem (7) an wenigstens einer Achse (4) des Fahrzeuges (2) einen gemeinsamen Bremsdruckmodulator (12) für die Räder (8, 9) dieser Achse (4) aufweist, **gekennzeichnet durch** folgende Merkmale:

   a) es wird geprüft, ob eine Umkippgefahr für das Fahrzeug (2) besteht,
   b) bei Umkippgefahr wird die Bremsanlage des Fahrzeuges (2) **durch** die elektronische Steuerung automatisch betätigt,
   c) während dieser automatischen Betätigung berücksichtigt das Antiblockiersystem (7) das Raddrehverhalten des kurveninneren Rades (8) der Achse (4) mit dem gemeinsamen Bremsdruckmodulator (12) für die Blockiervermeidung zumindest zeitweise nicht.

2. Verfahren nach Anspruch 1, **dadurch gekennzeichnet, dass** das Antiblockiersystem (7) an der Achse (4) mit dem gemeinsamen Bremsdruckmodulator (12) nach dem Select-Low-Verfahren arbeitet.

3. Verfahren nach wenigstens einem der vorhergehenden Ansprüche, **dadurch gekennzeichnet, dass** das Antiblockiersystem (7) an der Achse (4) mit dem gemeinsamen Bremsdruckmodulator (12) während der automatischen Betätigung nach dem Select-High-Verfahren arbeitet.

4. Verfahren nach wenigstens einem der vorhergehenden Ansprüche, **dadurch gekennzeichnet, dass** auf Umkippgefahr erkannt wird, wenn zumindest das kurveninnere Rad (8) der Achse (4) mit dem gemeinsamen Bremsdruckmodulator (12) keinen oder zumindest einen deutlich verringerten Bodenkontakt aufweist.

5. Verfahren nach wenigstens einem der vorhergehenden Ansprüche, **dadurch gekennzeichnet, dass** ein Umkippgefahr-Faktor (U) berechnet wird, der ein Maß für den Bodenkontakt des kurveninneren Rades (8) der Achse (4) mit dem gemeinsamen Bremsdruckmodulator (12) ist.

6. Verfahren nach Anspruch 5, **dadurch gekennzeichnet, dass** die bei der automatischen Betätigung der Bremsanlage an den Bremsen eingestellte Bremskraft nach Maßgabe des Umkippgefahr-Faktors (U) bestimmt wird, derart, dass die Bremskraft desto höher ist, je geringer der Bodenkontakt des kurveninneren Rades (8) der Achse (4) mit dem gemeinsamen Bremsdruckmodulator (12) ist.

**Claims**

1. Method of braking a vehicle (2), in which the braking system of the vehicle (2) is actuatable automatically by electronic control means, the braking system being controllable by an anti-lock system (7) to avoid locking of wheels (8, 9, 10, 11), and the braking system having for lock avoidance by the anti-lock system (7) on at least one axle (4) of the vehicle (2) a common braking pressure modulator (12) for the wheels (8, 9) of that axle (4), **characterized by** the following features:

   a) a check is made as to whether the vehicle (2) is at risk of overturning;
   b) if there is a risk of overturning, the braking system of the vehicle (2) is automatically actuated by the electronic control means;
   c) during that automatic actuation, the anti-lock system (7), at least at times, does not take into account for lock avoidance the rotational behaviour of the bend-inner-side wheel (8) of the axle (4) having the common braking pressure modulator (12).

2. Method according to claim 1, **characterized in that** the anti-lock system (7) on the axle (4) having the common braking pressure modulator (12) operates in accordance with the Select Low method.

3. Method according to at least one of the preceding claims, **characterized in that** the anti-lock system (7) on the axle (4) having the common braking pressure modulator (12) operates in accordance with the Select High method during automatic actuation.

4. Method according to at least one of the preceding claims, **characterized in that** a risk of overturning is identified when at least the bend-inner-side wheel (8) of the axle (4) having the common braking pressure modulator (12) has no contact or at least significantly reduced contact with the ground.

5. Method according to at least one of the preceding claims, **characterized in that** an overturning risk factor (U) is calculated, which is a measure of the contact between the bend-inner-side wheel (8) of the axle (4) having the common braking pressure modulator (12) and the ground.

6. Method according to claim 5, **characterized in that** the braking force set at the brakes on automatic actuation of the braking system is determined in accordance with the overturning risk factor (U) so that the braking force is the higher, the less is the contact between the bend-inner-side wheel (8) of the axle (4) having the common braking pressure modulator (12) and the ground.

## Revendications

1. Procédé pour le freinage d'un véhicule (2), dans lequel l'installation de freinage du véhicule (2) est actionnable automatiquement par commande électronique, l'installation de freinage pouvant être commandée par un système antiblocage (7) pour éviter le blocage des roues (8, 9, 10, 11 ), et, pour éviter le blocage par le système antiblocage (7), l'installation de freinage comprend sur au moins un essieu (4) du véhicule (2) un modulateur de pression de freinage (12) commun pour les roues (8, 9) de cet essieu (4), **caractérisé par** les éléments suivants :

   a) on vérifie s'il existe un risque de renversement pour le véhicule (2),
   b) en cas de risque de renversement, l'installation de freinage du véhicule (2) est actionnée automatiquement par la commande électronique,
   c) pendant cet actionnement automatique, le système antiblocage (7) ne prend au moins temporairement pas en compte le comportement de rotation de la roue (8) intérieure au virage de l'essieu (4) comprenant le modulateur de pression de freinage (12) commun, pour éviter le blocage.

2. Procédé selon la revendication 1, **caractérisé en ce que** le système antiblocage (7) sur l'essieu (4) muni du modulateur de pression de freinage (12) commun fonctionne selon le procédé dit "select-low".

3. Procédé selon l'une des revendications précédentes, **caractérisé en ce que** pendant l'actionnement automatique, le système antiblocage (7) sur l'essieu (4) muni du modulateur de pression de freinage (12) commun fonctionne selon le procédé dit "select-high".

4. Procédé selon l'une des revendications précédentes, **caractérisé en ce qu'**un risque de renversement est reconnu lorsque au moins la roue (8) intérieure au virage de l'essieu (4) muni du modulateur de pression de freinage (12) commun ne présente pas de contact au sol ou au moins un contact au sol nettement réduit.

5. Procédé selon l'une des revendications précédentes, **caractérisé en ce que** l'on calcule un facteur de risque de renversement (U) qui est une valeur pour le contact au sol de la roue (8) intérieure au virage de l'essieu (4) muni du modulateur de pression de freinage (12) commun.

6. Procédé selon la revendication 5, **caractérisé en ce que** la force de freinage réglée au niveau des freins lors de l'actionnement automatique de l'installation de freinage est définie en fonction du facteur de risque de renversement (U), de telle sorte que la force de freinage est d'autant plus élevée que le contact au sol de la roue (8) intérieure au virage de l'essieu (4) muni du modulateur de pression de freinage (12) commun est faible.

**Fig. 1**

```
              ┌─────────────┐
              │    Start    │ ⟍__ 20
              └──────┬──────┘
                     │
                     ▼
          ┌────────────────────────┐
          │  Umkippgefahr-Faktor   │
          │       berechnen        │ ⟍ 21
          │ U = f (S₈; S₁₀; D₈)    │
          └───────────┬────────────┘
                      │
                      ▼       ⟍ 22
                    ◇◇◇◇◇
                  ◇         ◇    n
                 ◇   U > W    ◇ ──────────┐        25
                  ◇    ?     ◇            │         ⟍
                    ◇◇◇◇◇               │
                      │ J                │
                      ▼     ⟍ 23         ▼
          ┌────────────────────┐  ┌──────────────┐
          │  Bremskraft f(U)   │  │  Select-Low  │
          │     aufbringen     │  └──────┬───────┘
          └─────────┬──────────┘         │
                    │    ⟍ 24            │
                    ▼                    │
          ┌────────────────────┐         │
          │    Select- High    │         │
          └─────────┬──────────┘         │
                    │                    │
                    ◄────────────────────┘
                    │
                    ▼
              ┌─────────────┐
              │    Ende     │ ⟍ 26
              └─────────────┘
```

$U = f (S_8; S_{10}; D_8)$

**Fig. 2**

**EP 1 571 058 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1142768 A2
- EP 1136334 A1